# EUROPÄISCHE PATENTSCHRIFT

(11) **EP 0 621 304 B1**
(45) Veröffentlichungstag und Bekanntmachung des Hinweises auf die Patenterteilung: **05.11.1997**
(21) Anmeldenummer: 94104667.4
(22) Anmeldetag: 24.03.1994
(51) Int. Cl.: C08K 3/22, C08K 9/06, C08G 69/28

(54) **Verfahren zur Herstellung von flammgeschützten thermoplastischen Formmassen auf der Basis von Polyamiden.**
Process for preparing flame-resistant thermoplastic mouldings based on polyamides.
Procédé pour préparer les masses à mouler thermoplastiques ignifugées à base de polyamides.

(30) Priorität: 20.04.1993 DE 4312752
(43) Veröffentlichungstag der Anmeldung: 26.10.1994
(73) Patentinhaber: BASF Aktiengesellschaft, 67063 Ludwigshafen (DE)
(72) Erfinder: Gareiss, Brigitte, Dr., D-67071 Ludwigshafen (DE); Baierweck, Petra, Dr., D-67459 Boehl-Iggelheim (DE); Plachetta, Christoph, Dr., D-67117 Limburgerhof (DE); Ulmerich, Karlheinz, D-67245 Lambsheim (DE)

(56) Entgegenhaltungen:
- EP-A- 0 278 555
- EP-A- 0 335 165
- EP-A- 0 426 243
- FR-A- 2 314 892
- DATABASE WPI Section Ch, Week 8113, Derwent Publications Ltd., London, GB; Class A23, AN 81-22235D & JP-A-56 010 554 (UNITIKA KK) 3. Februar 1981
- DATABASE WPI Section Ch, Week 8601, Derwent Publications Ltd., London, GB; Class A23, AN 86-004627 & JP-A-60 232 610 (ASAHI CHEMICAL IND KK (TOJY ) TOKAI RIKA DENKI KK) 19. November 1985
- DATABASE WPI Section Ch, Week 8625, Derwent Publications Ltd., London, GB; Class A60, AN 86-158831 & JP-A-61 091 232 (ASAHI GLASS KK) 9. Mai 1986

## Beschreibung

Die Erfindung betrifft ein verbessertes Verfahren zur Herstellung von flammgeschützten thermoplastischen Formmassen.

Halogenhaltige Flammschutzmittel sind aus toxikologischen Gründen bei der Herstellung und Verarbeitung bedenklich. Im Brandfall setzten derartige Flammschutzmittel korrosive Halogenwasserstoffe frei.

Die flammhemmende Wirkung von Magnesiumhydroxid ist aus der DE-A 26 24 065 bekannt und beruht auf der endothermen Wasserabspaltung und der selbstverlöschenden Wirkung des entstehenden Wasserdampfes.

Die für einen ausreichenden Flammschutz erforderlichen hohen Füllstoffmengen führen bei der Einarbeitung mittels üblichen Konfektioniermethoden zu großen Problemen. Insbesondere schäumt die Schmelze durch den hohen Lufteintrag bei der Einarbeitung auf, so daß ein Granulat mit niedriger Schüttdichte entsteht, d.h. in Säcken gleichen Volumens kann gewichtsmäßig weniger Granulat abgefüllt werden.

Aus der EP-A-335 165 ist es bekannt, die Einarbeitung des hohen Füllstoffanteils mittels einer sogenannten Doppelkonfektionierung durchzuführen, d.h. das Hydroxid wird in 2 Extrusionsschritten in das Polyamid eingebracht. Die Flammschutzeigenschaften sind jedoch unbefriedigend.

Aus den japanischen Schriften 53104-650 und 63210-165 ist es bekannt, oberflächlich behandeltes Magnesiumhydroxid als Flammschutzmittel für Thermoplaste zu verwenden.

Die mechanischen Eigenschaften sind jedoch nicht zufriedenstellend, die Einarbeitungsprobleme können ferner durch die Oberflächenbehandlung nicht beseitigt werden.

Aufgabe der vorliegenden Erfindung war es daher, ein Verfahren zur Herstellung von flammgeschützten thermoplastischen Polyamidformmassen zur Verfügung zu stellen, das Polyamide mit guten Flammschutzeigenschaften und mechanische Eigenschaften, insbesondere einer guten Schlagzähigkeit, liefert.

Zusätzlich soll bei der Einarbeitung der hohen Füllstoffmengen ein Aufschäumen des Granulatstranges vermieden werden, so daß ein kompaktes Granulat mit einer hohen Schüttdichte erzielt werden kann.

Diese Aufgabe wird durch ein Verfahren zur Herstellung von flammgeschützten thermoplastischen Formmassen gelöst, welche erhältlich sind durch Einmischen von
A) 20 bis 70 Gew.-% eines Magnesiumhydroxides und
B) 0 bis 70 Gew.-% weiterer Zusatzstoffe und Verarbeitungshilfsmittel
   in eine Schmelze von
C) 10 bis 80 Gew.-% eines Polyamid-Präpolymeren mit einer Viskositätszahl von 40 bis 100 ml/g (gemessen an einer 0,5 gew.-%igen Lösung in konzentrierter Schwefelsäure bei 23°C)
und anschließender Nachkondensation in fester Phase.

Bevorzugte Ausführungsformen sind den Unteransprüchen zu entnehmen.

Als Komponente A) enthalten die erfindungsgemäßen Formmassen 20 bis 70, bevorzugt 30 bis 60 und insbesondere 40 bis 55 Gew.-% eines Magnesiumhydroxids als Flammschutzmittel.

Die im Handel erhältlichen Produkte sind plättchenförmige Feststoffe und weisen im allgemeinen eine spezifische Oberfläche, bestimmt nach der BET Methode gemäß DIN 66 131 im Bereich von 5 bis 100 m²/g, bevorzugt von 5 bis 20 und insbesondere von 8 bis 12 m²/g auf. Die mittlere Teilchengröße beträgt im allgemeinen von 0,4 bis 20 µm, bevorzugt von 0,5 bis 2 µm und insbesondere von 0,8 bis 1,5 µm.

Herstellverfahren sind dem Fachmann bekannt, so daß weitere Einzelheiten sich erübrigen.

Bevorzugt sind als Flammschutzmittel in den erfindungsgemäßen Formmassen Magnesiumhydroxide, welche mit einer Silanverbindung oberflächlich vorbehandelt sind.

Durch die Silanisierung lassen sich günstigere mechanischen Eigenschaften (insbesondere die Schlagzähigkeit) der Formkörper erzielen.

Geeignete Silanverbindungen sind solche der allgemeinen Formel III

(X-CH₂)ₙ)_{K}-Si-(O-CₘH₂ₘ₊₁)_{4-K} III

in der die Substituenten folgende Bedeutung haben:
- X: NH₂-; 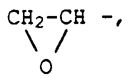 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf A) zur Oberflächenbeschichtung eingesetzt.

Als Komponente B) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Kautschuke (Zähmodifier), Keimbildungsmittel, Weichmacher usw. enthalten, deren Anteil in der Regel nicht mehr als 70 Gew.-%, bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Iodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilikat (Wollastonit), Aluminiumsilikat, Magnesiumcarbonat, Kaolin, Kreide, gepulverter Quarz, Glimmer und Feldspat. Der Anteil derartiger Füllstoffe beträgt im allgmeinen bis zu 50 Gew.-%, bevorzugt 10 bis 35 Gew.-%.

Als Keimbildungsmittel können Natriumphenylphosphinat, Aluminiumoxid, Siliziumdioxid, Nylon 22 sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-stearat) oder Esterderivate (z.B. Stearylstearat oder Pentaerythrittetrastearat) sowie Amidderivate (z.B. Ethylen-bis-stearylamid).

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Geeignete Kautschuke (Zähmodifier) für Polyamide, welche allgemein in Mengen bis zu 20 Gew.-% eingesetzt werden können, sind dem Fachmann bekannt, so daß sich weitere Angaben hierzu erübrigen.

Als Komponente C) enthalten die erfindungsgemäßen thermoplastischen Formmassen 10 bis 80 Gew.-%, bevorzugt 20 bis 70 Gew.-%, insbesondere 25 bis 60 Gew.-% eines Polyamid-Präpolymeren mit einer Viskositätszahl von 40 bis 100 ml/g, bevorzugt 40 bis 85 ml/g, gemessen an einer 0,5 gew.-%igen Lösung in konzentrierter Schwefelsäure bei 23°C.

Als Polyamide, die zur Herstellung der Komponente C) verwendet werden können, sind thermoplastische teilkristalline Polyamide zu nennen.

Geeignete Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid, Polyhexamethylenazelainsäureamid, Polyhexamethylensebacinsäureamid, Polyhexamethylendodecandisäureamid, Polytetramethylenadipinsäureamid, und die durch Ringöffnung von Lactamen erhaltenen Polyamide wie Polycaprolactam und Polylaurinsäurelactam.

In der Regel sind diese teilkristallinen Polyamide linear.

Besonders bevorzugt sind Polytetramethylenadipinsäureamid, Polyhexamethylenadipinsäureamid, Polyhexamethylensebacinsäureamid und Polycaprolactam sowie Copolyamide aus Terephthalsäure, Hexamethylendiamin und ε-Caprolactam oder aus Terephthalsäure, Isophthalsäure, ggf. Adipinsäure und Hexamethylendiamin mit mehr als 50 Gew.-% Terephthalsäure/Hexamethylendiamin-Einheiten; insbesondere Polyhexamethylenadipinsäureamid und Polycaprolactam. Es können jedoch auch Mischungen verschiedener Polyamide verwendet werden.

Die Herstellung der Polyamid-Präpolymeren mit einer Viskositätszahl von 40 bis 100 ml/g (Komponente C) kann z.B. nach den in den EP-A 129 195, 129 196 und EP-A 299 444 beschriebenen Verfahren erfolgen. Weitere übliche Herstellweisen, welche diskontinuierlich als auch kontinuierlich sein können, sind dem Fachmann bekannt, so daß sich weitere Angaben hierzu erübrigen.

Nach einer bevorzugten Arbeitsweise leitet man das Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat (Komponente C) wird bei etwa 20°C über dem Schmelzpunkt der Komponente (im Falle von Polyhexamethylenadipamid bei etwa 280°C), bevorzugt in einem Doppelschneckenextruder aufgeschmolzen und mit dem Flammschutzmittel und gegebenenfalls der Komponente B) gemischt, als Strang ausgetragen, gekühlt und granuliert.

In einer besonders bevorzugten Ausführungsform ist es auch möglich, die Komponente A) und gegebenenfalls B) schon in den Entgasungsextruder zu geben, wobei in diesem Fall der Entgasungsextruder üblicherweise mit geeigneten Mischelementen, wie Kneter, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf verwendet wird.

Die Viskositätszahl, gemessen an einer 0,5 gew.-%igen Lösung in 96 %iger Schwefelsäure bei 23°C, liegt nach der Nachkondensation in fester Phase im allgemeinen im Bereich von 130 bis 500 ml/g, vorzugsweise von 150 bis 250 ml/g.

Die erfindungsgemäßen Formmassen zeichnen sich durch gute Flammschutzeigenschaften und mechanische Eigenschaften aus. Insbesondere wird bei der Einarbeitung der hohen Füllstoffmengen das Aufschäumen des Granulatstranges drastisch reduziert, so daß ein kompaktes Granulat mit einer hohen Schüttdichte entsteht.

### Beispiele

### Komponente A

Magnesiumhydroxid, aminosilanisiert
(Magnifin® H10B, der Martinswerk GmbH, DE)

### Komponente B

Schnittglasfasern, aminosilanisiert mit einer mittleren Faserlänge von 4,5 mm und einem mittleren Faserdurchmesser von 10 µm.

### Komponente C/1

Eine 65 %ige wäßrige Lösung von 40 kg ε-Caprolactam wurde in einem 100 1-Autoklaven während 1 h auf 270°C aufgeheizt, wobei der entstehende Druck ab dem Erreichen von 32 bar durch Entspannen von überschüssigem Wasserdampf konstant gehalten wurde. Anschließend wurde das Produkt unter Druck aus dem Autoklaven in Wasser ausgefahren, abgekühlt und granuliert. Das Präpolymere hatte eine Viskositätszahl von 85 ml/g und ein Extraktgehalt von 11 % (Restgehalt an ε-Caprolactam).

### Komponente C/2

Ein Copolyamid-Präpolymeres aus 70 Gew.-% Einheiten, die sich von Terephthalsäure/Hexamethylendiamin ableiten und 30 Gew.-% Einheiten, die sich von ε-Caprolactam ableiten, hergestellt nach dem in der EP-A 129 195 beschriebenen Verfahren, wobei eine 65 %ige wäßrige Lösung von ε-Caprolactam und eines äquimolaren Terephthalsäure/Hexamethylendiamin-Salzes kontinuierlich in einem Rohrbündelreaktor mit einem Durchsatz entsprechend einer Polyamidmenge von 8 kg/h bei einer Temperatur von 315°C und einem Druck von 8 bar polykondensiert wurde.

Das Produkt wies eine Viskositätszahl von 85 ml/g auf.

### Komponente C/1V

PA6 mit einer Viskositätszahl von 190 ml/g
(Ultramid® B35 der BASF AG)

### Komponente C/2V

Ein Copolyamid aus 70 Gew.-% Einheiten, die sich von Terephthalsäure/Hexamethylendiamin ableiten und 30 Gew.-% Einheiten, die sich von ε-Caprolactam ableiten, mit einer Viskositätszahl von 145 ml/g. (Ultramid® T KR 4351 der BASF AG)

### Beispiele 1 und 2

Auf einem Zweischneckenextruder (ZSK 53 von Werner & Pfleiderer) wurde das Präpolymere C/1 bei 260°C aufgeschmolzen und mit Komponente A sowie ggf. B in üblicher Weise gemischt und konfektioniert. Anschließend wurde das Produkt zweimal je 4 h bei 60°C in Wasser extrahiert (Verhältnis Produkt : Wasser = 1:4 Gew-%) und anschließend 12 h bei 80°C im Vakuum getrocknet. Das Produkt wurde als Strang ausgetragen, gekühlt und granuliert und unter Stickstoff bei 160°C in einem Taumelmischer auf die in der Tabelle angegebene VZ nachkondensiert.

(Die in der Tabelle angegebenen Füllstoffgehalte sind auf Produkt nach Extraktion bezogen.)

### Beispiel 3

Das Polyamidpräpolymere (Komponente C/2) wurde als Schmelze mittels einer Austragungsschnecke aus dem Abscheidegefäß der Polykondensationsanlage in einen Doppelschneckenextruder (ZSK 53 Werner & Pfleiderer) eingebracht und mit dem Mg(OH)₂ bei 300°C gemischt. Anschließend wurde durch Anlegen von Vakuum entgast, wobei praktisch keine Nachkondensation eintrat. Das Produkt wurde als Strang ausgetragen, gekühlt und granuliert und unter Stickstoff bei 200°C in einem Taumlermischer auf die in der Tabelle angegebene VZ nachkondensiert.

### Vergleichsbeispiele 1 bis 4

Auf einem Zweischneckenextruder (ZSK 53 von Werner & Pfleiderer) wurden bei 260°C bzw. 320°C die Komponenten C/1V bzw. C/2V aufgeschmolzen und mit Komponente A sowie gegebenenfalls B in üblicher Weise gemischt und konfektioniert.

### Vergleichsbeispiel 5V (gemäß EP-A 335 165)

In einem 1. Schritt wurde Komponente C/1V bei 260°C zunächst mit 25 Gew.-% Mg(OH)₂ auf einem Zweischneckenextruder in üblicher Weise konfektioniert.

Das erhaltene Granulat wurde in einem 2. Schritt erneut in einem Zweischneckenextruder eingebracht und aufgeschmolzen. Anschließend erfolgte die Zugabe von weiteren 20 Gew.-% Mg(OH)₂ und 10 Gew.-% Glasfasern (Komponente B). Die Schmelze wurde als Strang ausgetragen, gekühlt und granuliert.

Auf einer Spritzgußmaschine wurden bei 260°C bzw. 300°C Normprüfkörper hergestellt.

Von den Produkten wurden die Flammschutzeigenschaften nach UL 94 an 1/32 Zollstäben bestimmt, die Schlagzähigkeit (aₙ) wurde nach DIN 53453 gemessen.

Die Ermittlung des Schüttgewichts erfolgte nach mechanischem Rütteln des Granulates durch Wiegen von 1 l Granulat.

Die Zusammensetzung der Formmassen und die Ergebnisse der Messungen sind der Tabelle zu entnehmen.

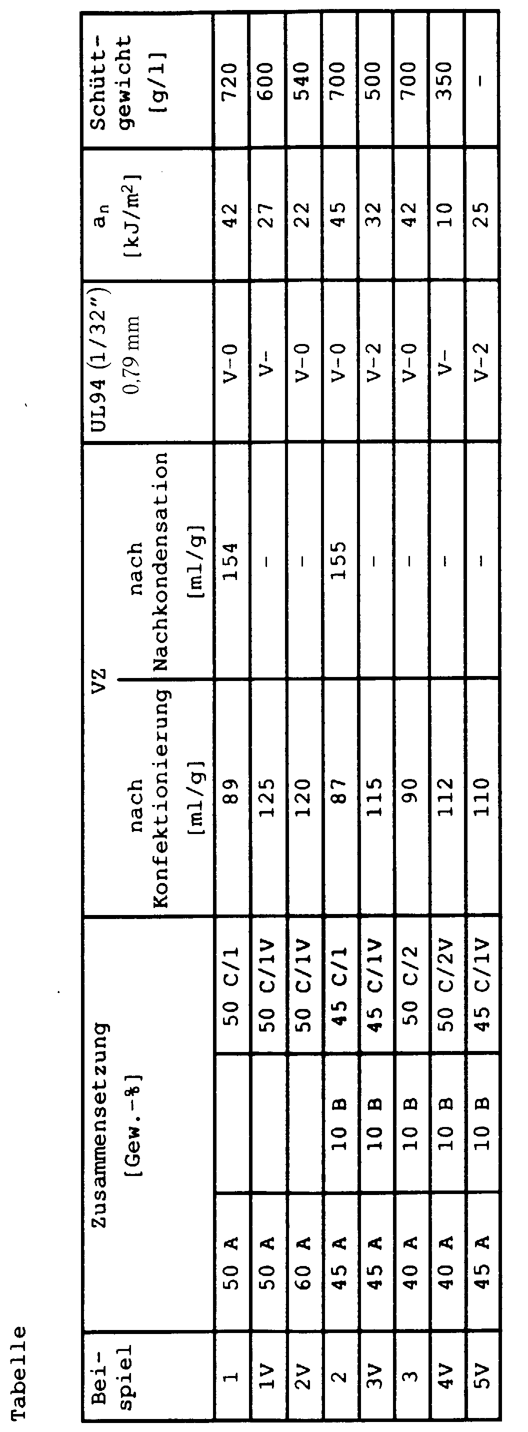

- Gegenüber Beispiel 1 wird in 1V keine UL-Klassifizierung erreicht. Erst mit 10 % mehr Hydroxid wird in 2V VO erzielt unter deutlicher Verschlechterung der Schlagzähigkeit.
- Bei Einsatz von C/2V ist das Granulat stark aufgeschäumt, (niederes Schüttgewicht) was auf Polymerabbau und Wasserabspaltung aus dem Hydroxid schließen läßt (Beispiel 4V). Die Schlagzähigkeit ist deutlich schlechter im Hinblick auf Beispiel 3.

## Patentansprüche

1. Verfahren zur Herstellung von flammgeschützten thermoplastischen Formmassen, erhältlich durch Einmischen von
A) 20 bis 70 Gew.-% eines Magnesiumhydroxides und
B) 0 bis 70 Gew.-% weiterer Zusatzstoffe und Verarbeitungshilfsmittel
in eine Schmelze von
C) 10 bis 80 Gew.-% eines Polyamid-Präpolymeren mit einer Viskositätszahl von 40 bis 100 ml/g (gemessen an einer 0,5 gew.-%igen Lösung in konzentrierter Schwefelsäure bei 23°C).
und anschließender Nachkondensation in fester Phase.

2. Verfahren nach Anspruch 1, dadurch gekennzeichnet, daß das Polyamid nach der Nachkondensation in fester Phase eine Viskositätszahl von mindestens 130 ml/g aufweist.

3. Verfahren nach den Ansprüchen 1 bis 2, dadurch gekennzeichnet, daß die Komponente A ein mit einer Silanverbindung vorbehandeltes Magnesiumhydroxid ist.

## Claims

1. A process for the preparation of a flameproofed thermoplastic molding material obtainable by mixing
A) from 20 to 70% by weight of a magnesium hydroxide and
B) from 0 to 70% by weight of further additives and processing assistants
into a melt of
C) from 10 to 80% by weight of a polyamide prepolymer having a viscosity number of from 40 to 100 ml/g (measured in a 0.5% strength by weight solution in concentrated sulfuric acid at 23°C)
and then carrying out solid-phase postcondensation.

2. A process as claimed in claim 1, wherein, after the solid-phase postcondensation, the polyamide has a viscosity number of at least 130 ml/g.

3. A process as claimed in claim 1 or 2, wherein component A is a magnesium hydroxide pretreated with a silane compound.

## Revendications

1. Procédé pour préparer des masses à mouler thermoplastiques ignifugées, pouvant être obtenues par incorporation de
A) 20 à 70 % en poids d'un hydroxyde de magnésium et
B) 0 à 70 % en poids d'additifs et d'adjuvants de mise en oeuvre supplémentaires
dans une masse en fusion de
C) 10 à 80 % en poids d'un prépolymère de polyamide avec un nombre de viscosité de 40 à 100 ml/g (mesuré sur une solution à 0,5 % en poids dans l'acide sulfurique concentré à 23 °C)
et par recondensation subséquente en phase solide.

2. Procédé selon la revendication 1, caractérisé en ce que le polyamide présente un nombre de viscosité d'au moins 130 ml/g après la recondensation en phase solide.

3. Procédé selon les revendications 1 à 2, caractérisé en ce que le composant A est un hydroxyde de magnésium prétraité par un composé silane.
